# EUROPÄISCHE PATENTSCHRIFT

(11) **EP 2 181 894 B1**
(45) Veröffentlichungstag und Bekanntmachung des Hinweises auf die Patenterteilung: **23.05.2012**
(21) Anmeldenummer: 09174789.9
(22) Anmeldetag: 02.11.2009
(51) Int. Cl.: B60R 9/06, B60R 9/10

(54) **Hecklastenträger**
Rear load carrier
Porte-charge

(30) Priorität: 03.11.2008 DE 102008055621
(43) Veröffentlichungstag der Anmeldung: 05.05.2010
(73) Patentinhaber: Meyer, Martin, 48527 Nordhorn (DE)
(72) Erfinder: Meyer, Martin, 48527 Nordhorn (DE)
(74) Vertreter: Werner & ten Brink

(56) Entgegenhaltungen:
- DE-A1- 19 828 707
- RU-C1- 2 051 059
- US-A- 4 744 590
- US-A- 6 099 035
- US-A1- 2006 145 461

## Beschreibung

Die vorliegende Erfindung betrifft einen Hecklastenträger für ein Fahrzeug, insbesondere Kraftfahrzeug, gemäß dem Oberbegriff des Anspruchs 1. Sie betrifft weiter ein Verfahren zur reversiblen Konvertierung eines solchen Hecklastenträgers sowie ein Verfahren zur Kopplung eines konvertierbaren Hecklastenträgers mit einem Fahrzeug.

Lastenträger für Kraftfahrzeuge sind allgemein bekannt. So finden bei Personenkraftfahrzeugen Dachlastenträger oder Hecklastenträger häufig Verwendung. Sie umfassen ein Tragelement für eine Last und sind lösbar mit dem Kraftfahrzeug, also einem Dach oder Heck des Kraftfahrzeugs, verbindbar. Das Tragelement wird dabei beispielsweise von einem Rahmen, ggf. mit Verstrebungen, gebildet. Für spezifische Lasten, wie z. B. ein Fahrrad, werden zusammen mit dem Lastenträger spezifische Halteelemente ("Radhalter") verwendet, also z. B. rinnenförmige, längliche Elemente zur Aufnahme eines unteren Radteils des Fahrrades, ggf. zusammen mit Zusatzelementen, die beispielsweise an einem Rahmen des Fahrrades angreifen, um das Fahrrad am Lastenträger zu fixieren. Solche Hecklastenträger und Dachlastenträger werden jeweils nur am Heck bzw. Dach angebracht und sind somit unifunktional.

Aus der US 6,099,035 ist ein konvertierbarer Lastenträger bekannt, der einerseits als Hecklastenträger mit an einem Kraftfahrzeug angebracht werden kann und an dem zur Verwendung unabhängig von dem Kraftfahrzeug Räder, ein Ständer und ein Handgriff anbringbar sind. Aus der US 2006/0145461 ist ein Wagen bekannt, der an einem rückwärtigen Teil eines Lastkraftwagen aufgenommen und dort mit einer von dem Wagen umfassten Hubvorrichtung zur Kombination mit dem Lastkraftwagen positioniert werden kann.

Eine Aufgabe der vorliegenden Erfindung ist es, einen mehrfunktionalen Hecklastenträger für ein Fahrzeug anzugeben, welcher sich aufgrund seiner Mehrfunktionalität zum Lastentransport besonders vielseitig einsetzen lässt.

Diese Aufgabe wird gelöst durch einen Hecklastenträger für ein Fahrzeug mit den Merkmalen des Anspruchs 1. Im Folgenden werden die Begriffe Kraftfahrzeug, Zweirad oder Fahrrad verwendet, wobei zur Auslegung der Patentansprüche immer der generische Begriff, also Fahrzeug, herangezogen werden soll.

Der Hecklastenträger umfasst dabei eine erste Befestigungsvorrichtung für zumindest eine Roll- oder Gleitvorrichtung und zumindest eine zweite Befestigungsvorrichtung für eine Schub- oder Zugvorrichtung, was in einer großen Variabilität bezüglich einer Verwendung des Hecklastenträgers resultiert, da dieser aufgrund der ersten und zweiten Befestigungsvorrichtung einfach und komfortabel, beispielsweise in einen Lastenanhänger für ein Zweirad, oder einer Handkarre umgewandelt (konvertiert), werden kann.

Hierdurch erschließt sich eine Vielzahl zusätzlicher Einsatzmöglichkeiten des Hecklastenträgers gegenüber üblichen Hecklastenträgem. Ein Beispiel für eine besondere Nützlichkeit sind Urlaubsreisen, insbesondere Urlaubsreisen zu Regionen, in denen Kraftfahrzeugverkehr nicht oder nur eingeschränkt gestattet oder sogar unmöglich ist. In einer Zielregion kann der Hecklastenträger vom Kraftfahrzeug abgenommen und beispielsweise in eine Handkarre oder einen Fahrradanhänger umgewandelt werden, um eine Last, beispielsweise Gepäck oder dergleichen, komfortabel und einfach weiterzutransportieren. Wenn ggf. zusätzliches Zubehör für den Lastenträger verwendet wird, ergeben sich noch weitere, vielfältige Anwendungsmöglichkeiten. So können z. B. Kinder, Heimtiere, Einkäufe, sperrige und/oder schwere Gegenstände wie Angelzubehör, Campingutensilien und dergleichen einfach und komfortabel dort transportiert werden, wo ein Kraftfahrzeugeinsatz nicht oder nur eingeschränkt möglich ist oder aus anderen Gründen unerwünscht ist.

Eine weitere Aufgabe der vorliegenden Erfindung ist es, ein einfaches Verfahren zur reversiblen Konvertierung eines Hecklastenträgers anzugeben.

Diese Aufgabe wird gelöst durch ein Verfahren zur reversiblen Konvertierung eines Hecklastenträgers wie vorhergehend und im Folgenden beschrieben, mit einer ersten Befestigungsvorrichtung für zumindest eine Roll- oder Gleitvorrichtung und zumindest einer zweiten Befestigungsvorrichtung für eine Schub- oder Zugvorrichtung, bei welchem die Roll- oder Gleitvorrichtung und die Schub- oder Zugvorrichtung in eine Wirkposition gebracht werden. Die erste und zweite Befestigungsvorrichtung sind dabei bereits am Hecklastenträger vorhanden und nur die Roll- oder Gleitvorrichtung und die Schub- oder Zugvorrichtung werden bei Bedarf in die Wirkposition gebracht, was die Konvertierung besonders einfach und komfortabel macht.

Eine weitere Aufgabe der vorliegenden Erfindung ist, eine leichte und/oder komfortable Bewegbarkeit eines konvertierbaren Hecklastenträgers anzugeben.

Diese Aufgabe wird gelöst durch ein Verfahren zur Kopplung eines konvertierbaren Hecklastenträgers wie vorhergehend und im Folgenden beschrieben mit einem Fahrzeug, z. B. einem Fahrrad, wobei eine Kopplungsvorrichtung des Hecklastenträgers mit dem Fahrzeug gekoppelt wird. Mit dem Fahrzeug gekoppelt ist der Hecklastenträger somit von einem Benutzer besonders leicht und komfortabel zu bewegen. So reduziert sich beispielsweise bei einer Kopplung mit einem Fahrrad eine subjektiv vom Nutzer festgestellte Kraftanstrengung zur Bewegung des Hecklastenträgers.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Die Roll- oder Gleitvorrichtung, für welche die erste Befestigungsvorrichtung vorgesehen und ausgebildet ist, kann dabei zumindest ein Rad oder zumindest eine Kufe (Bodenkontaktmittel), z. B. zwei, drei, vier oder mehr, umfassen. Hierdurch ergeben sich verschiedene Einsatzmöglichkeiten, da beispielsweise feste Untergründe besonders gut mit einer Rollvorrichtung, wie z. B. zumindest einem Rad, und nachgiebige, gleitfähige Untergründe besonders gut mit einer Gleitvorrichtung, also z. B. einer Kufe, zusammenwirken. Somit ist der Hecklastenträger besonders vorteilhaft an unterschiedliche Untergründe, z. B. Asphalt, Geröll, Kies, Sand, Pflaster, Schnee, Eis und dergleichen, anpassbar. Rad (Räder) oder Kufe (Kufen) haben bevorzugt eine dem Fachmann bekannte, geeignete Anordnung.

In einer bevorzugten Ausführungsform ist (/sind) die erste, zweite oder beide Befestigungsvorrichtung(en) von einer Strukturkomponente des Hecklastenträgers umfasst, insbesondere an dieser befestigt. Dies ist besonders vorteilhaft, da hierdurch eine hohe Belastbarkeit gewährleistet ist.

In einer bevorzugten Ausführungsform ist die Strukturkomponente ein ohnehin vorhandener Rahmen eines Tragelements des Hecklastenträgers. Dies resultiert in einer besonders platzsparenden und kompakten Bauweise des Hecklastenträgers.

Bevorzugt korrespondiert die erste Befestigungsvorrichtung mit einem Befestigungsteil der Roll- oder Gleitvorrichtung und die Befestigungsvorrichtung und das Befestigungsteil sind verbunden oder verbindbar. Wenn die Befestigungsvorrichtung und das Befestigungsteil unlösbar verbunden sind, ist das Befestigungsteil sowie jedes mit dem Befestigungsteil unlösbar verbundene Teil unverlierbar; bei einer lösbaren Verbindung kann das Befestigungsteil demontiert werden. Hierdurch ist ein Austausch des Befestigungsteils und/oder der gesamten Roll- oder Gleitvorrichtung besonders einfach und komfortabel möglich.

Die erste Befestigungsvorrichtung umfasst bevorzugt zumindest eine Steckachse oder eine Aufnahmevorrichtung für eine Steckachse. Dies gewährleistet, insbesondere wenn diese mit einer Aufnahmevorrichtung für die Steckachse bzw. einer Steckachse der Roll- oder Gleitvorrichtung korrespondiert, eine einfache und komfortable Verbindbarkeit. Dabei erfolgt die Verbindung insbesondere werkzeuglos durch Einstecken der Steckachse in die korrespondierende Aufnahmevorrichtung.

Bevorzugt ist die Schub- oder Zugvorrichtung mit dem Hecklastenträger mittels der zweiten Befestigungsvorrichtung dauerhaft verbindbar oder verbunden. Aufgrund der dauerhaften Verbindung ist diese somit unverlierbar. Z. B. kann die dauerhafte Verbindung mittels Schraub-, Schweiß-, Bolzenverbindung und/oder dergleichen hergestellt sein.

Die Schub- oder Zugvorrichtung ist bevorzugt schwenkbar, wobei sie nacheinander in verschiedenen Ebenen schwenkbar sein kann. Hierdurch lässt sich ein Winkel zwischen der Schub- oder Zugvorrichtung und dem Hecklastenträger, insbesondere dem Tragelement, Rahmen oder dergleichen, ändern. Zudem lässt sich die schwenkbare Schub- oder Zugvorrichtung platzsparend an den Hecklastenträger anlegen, also in Ruheposition bringen. Besonders bevorzugt ist die Schub- oder Zugvorrichtung in genau einer Ebene (Bewegungsebene) beweglich mit dem Hecklastenträger verbunden, was ein "Wegkippen" in einer anderen Ebene verhindert.

In einer bevorzugten Ausführungsform umfasst der Hecklastenträger eine Haltevorrichtung. Mittels dieser ist die Schub- oder Zugvorrichtung in einer Ruheposition, insbesondere an einer Unterseite des Hecklastenträgers, lösbar arretierbar. Die Unterseite des Hecklastenträgers kann z. B. eine Unterseite des Tragelements oder des Rahmens sein. Unterseite bezeichnet hier und im Folgenden eine von der, der Last zugewandten Seite abgewandte Seite. In Ruheposition ist die Schub- oder Zugvorrichtung somit besonders platzsparend angeordnet.

Bevorzugt ist ein, insbesondere abnehmbarer, Handgriff von einem freien Ende der Schub- oder Zugvorrichtung umfasst, was ein bequemes anfassen ermöglicht. Wenn der Handgriff abnehmbar ist, so verschmutzt dieser nicht, wenn die Schub- oder Zugvorrichtung in Ruheposition am Hecklastenträger verbleibt.

In einer bevorzugten Ausführungsform umfasst der Hecklastenträger eine Kopplungsvorrichtung an einem freien Ende der Schub- oder Zugvorrichtung zur Kopplung mit einem Fahrzeug, insbesondere Zweirad, also z. B. einem Fahrrad. Dabei kann die Kopplungsvorrichtung zur Kopplung mit einer Radnabenachse oder einem Rahmenteil des Fahrzeugs vorgesehen und ausgebildet sein. Bei Kopplung mit der Radnabenachse kann ein Nutzer beispielsweise Pedale, z. B. Fahrradpedale, bequem betätigen ohne an die Kopplungsvorrichtung zu stoßen. Zudem wird eine hohe Fahrstabilität gewährleistet. Bei Kopplung mit dem Rahmenteil ist eine besonders stabile Verbindung gewährleistet

In einer bevorzugten Ausführungsform ist die Schub- oder Zugvorrichtung zumindest eine Schub- oder Zugstange, z. B. zwei, drei oder mehr Zugstangen. Dabei kann z. B. eine Schub- oder Zugstange in Kombination mit zwei oder mehr Rädern oder Kufen vorgesehen sein oder zwei Schub- oder Zugstangen, welche bevorzugt parallel angeordnet sind, in Kombination mit einem Rad oder einer Kufe.

Der Hecklastenträger umfasst in einer bevorzugten Ausführungsform eine Arretiervorrichtung zur lösbaren Arretierung der Roll- oder Gleitvorrichtung in Ruheposition. Beispiele für geeignete Arretiervorrichtungen sind ein Zapfen, eine Achse für eine Radnabe, eine mit einer Radnabenachse korrespondierende Ausnehmung, eine Spannvorrichtung, eine Rastvorrichtung, eine Klemmvorrichtung und/oder dergleichen. Die Arretiervorrichtung kann ortsfern von der ersten Befestigungsvorrichtung angebracht sein, so dass ein Bauraum gut ausgenutzt wird. Sie kann z. B. einem Seitenelement des Hecklastenträgers zugeordnet sein, besonders vorteilhaft einer dem Tragelement abgewandten Seite des Seitenelements.

In einer bevorzugten Ausführungsform umfasst der Hecklastenträger eine Lichtleiste, insbesondere eine lösbar mit diesem verbundene Lichtleiste. Solche Lichtleisten sind allgemein bekannt und können neben bekannten Beleuchtungskörpern auch Reflektoren, Kennzeichen oder dergleichen umfassen. Lösen der Lichtleiste kann dabei einen Zugang zur ersten Befestigungsvorrichtung ermöglichen oder erleichtern. Hierdurch erhöht sich zum einen ein Nutzerkomfort, zum anderen kann die Lichtleiste zum Schutz der ersten Befestigungsvorrichtung vorgesehen und ausgebildet sein, insbesondere zum Schutz vor Verschmutzung oder Beschädigung. Besonders bevorzugt ist die Lichtleiste werkzeuglos lösbar und/oder anbringbar, was einen hohen Nutzerkomfort gewährleistet.

Der Hecklastenträger ist in einer bevorzugten Ausführungsform reversibel konvertierbar, so dass ein Nutzer nach Belieben den Hecklastenträger zu Handkarre, Fahrradanhänger, oder dergleichen und wieder zum Hecklastenträger für ein Kraftfahrzeug konvertieren kann. In einer bevorzugten Ausführungsform des Verfahrens zur reversiblen Konvertierung werden die Roll- oder Gleitvorrichtung und die erste Befestigungsvorrichtung und/oder die Schub- oder Zugvorrichtung und die zweite Befestigungsvorrichtung lösbar verbunden.

Bevorzugt werden zur reversiblen Konvertierung die Roll- oder Gleitvorrichtung, also z.B. das Rad, und die erste Befestigungsvorrichtung und/oder die Schub- oder Zugvorrichtung, also z.B. die Zug- oder Schubstange, und die zweite Befestigungsvorrichtung lösbar verbunden. Dabei werden zum Anbringen z.B. eines oder mehrerer Räder die erste Befestigungsvorrichtung und ein korrespondierendes Befestigungsteil der jeweiligen Roll- oder Gleitvorrichtung lösbar verbunden. Besonders bevorzugt erfolgt die lösbare Verbindung mittels Einstecken einer Achse in einen als erste Befestigungsvorrichtung fungierenden, korrespondierenden Radhalter hergestellt wird. Zur Zugänglichmachung der ersten Befestigungsvorrichtung wird dabei eine evtl. vorhandene Lichtleiste entfernt. Ebenfalls zur reversiblen Konvertierung wird die mit dem Hecklastenträger mittels der zweiten Befestigungsvorrichtung dauerhaft verbundene Schub- oder Zugvorrichtung mittels Verschwenken in die Wirkposition gebracht. Bevorzugt ist dabei vorgesehen, dass die Schub- oder Zugvorrichtung aus einer Ruheposition an einer Unterseite des Hecklastenträgers in die Wirkposition gebracht wird. In diesem Zusammenhang ist das evtl. Anbringen eines Handgriffs an einem freien Ende der Schub- oder Zugvorrichtung vorgesehen. Alternativ oder zusätzlich wird eine Kopplungsvorrichtung zur Kopplung mit einem Fahrzeug, insbesondere Zweirad, an einem freien Ende der Schub- oder Zugvorrichtung angebracht. Zur Verwendung des Hecklastenträgers mit dem Fahrzeug wird die Kopplungsvorrichtung des Hecklastenträgers mit dem Fahrzeug, insbesondere einem dort vorgesehenen korrespondierenden Fahrzeugteil, gekoppelt. In einer bevorzugten Ausführungsform des Verfahrens zur Kopplung eines konvertierbaren Hecklastenträgers ist das Fahrzeug ein Zweirad, insbesondere ein Fahrrad.

Wenn der Hecklastenträger nach der Verwendung z.B. als Fahrradanhänger, wieder am Kraftfahrzeug angebracht wird, ist bevorzugt vorgesehen, dass die Roll- oder Gleitvorrichtung von der ersten Befestigungsvorrichtung, also z.B. der Steckachse, gelöst und mittels einer Arretiervorrichtung lösbar in Ruheposition arretiert wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematische Darstellung eines Hecklastenträgers gemäß dem Stand der Technik,
- FIG 2: eine schematische Darstellung einer Ausführungsform eines erfindungsgemäßen Hecklastenträgers von unten,
- FIG 3: eine weitere Ausführungsform des erfindungsgemäßen Hecklastenträgers von unten und
- FIG 4: eine weitere Darstellung des erfindungsgemäßen Heck- lastenträgers wie in FIG 3 dargestellt von unten.

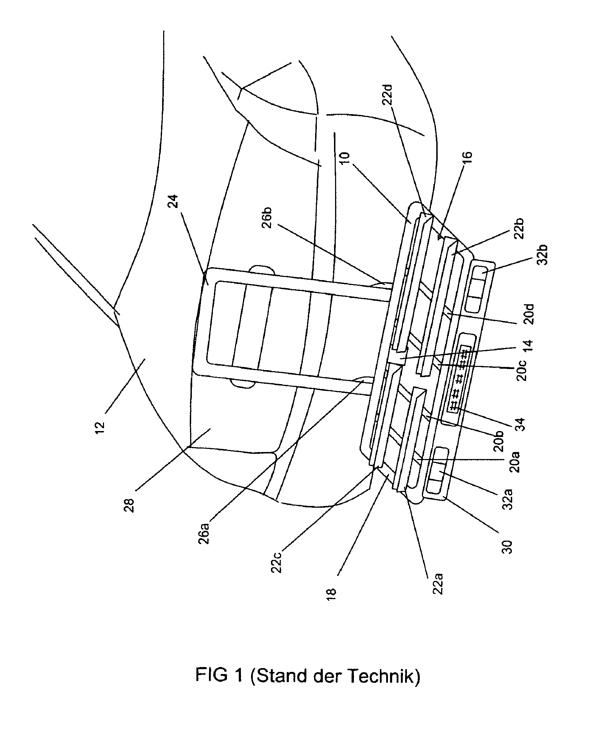

FIG 1 zeigt eine schematische Darstellung eines Hecklastenträgers 10 gemäß dem Stand der Technik, welcher mit einem Kraftfahrzeug 12 lösbar verbunden ist. Hier ist der Hecklastenträger 10 mittels einer Fixiervorrichtung 14 zur Fixierung an einer Anhängerkupplung mit dem Kraftahrzeug 12 lösbar verbunden, dem Fachmann sind jedoch andere, geeignete Verbindungen bekannt.

Ein Tragelement 16 für eine Last des Hecklastenträgers 10 wird von einem Rahmen 18 mit Querverstrebungen 20a, 20b, 20c und 20d gebildet. In der hier dargestellten Ausführung des Hecklastenträgers 10 sind auf Rahmen 18 und Querstreben 20a - d Radhalter 22a, 22b, 22c und 22d für Vorder- und Hinterrad eines Fahrrades (nicht dargestellt) angebracht. Des Weiteren umfasst der Hecklastenträger 10 ein Seitenelement 24, welches mittels geeigneter Verbindungsmittel 26a, 26b mit dem Rahmen 18 des Hecklastenträgers 10 verbunden ist und welches sich auf einer einem Heck 28 des Kraftfahrzeugs 12 zugewandten Seite des Hecklastenträgers 10 befindet. Das Seitenelement 24 kann zusätzliche Elemente (nicht dargestellt) umfassen, mittels welcher die Last gehalten und/oder gesichert werden kann. Zudem umfasst der Hecklastenträger 10 eine Lichtleiste 30, an welcher, wie im Stand der Technik bekannt, Leuchtelemente 32a, 32b angebracht sind und welche hier zudem ein Kennzeichen 34 trägt. Die Lichtleiste 30 kann jedoch weniger oder mehr Elemente umfassen oder sie kann gänzlich fehlen. Radhalter 22a - d und/oder Querstreben 20a - d können jedoch auch anders ausgeführt sein oder fehlen. Längsstreben können die Querstreben 20a - d ergänzen oder ersetzen.

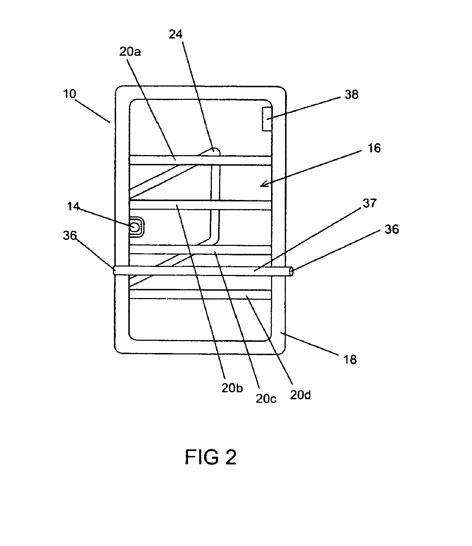

FIG 2 zeigt schematisch eine Ausführungsform eines erfindungsgemäßen Hecklastenträgers 10 von unten, welcher in seinen Grundzügen dem in FIG 1 dargestellten entspricht. In dieser Ausführungsform umfasst der konvertierbare Hecklastenträger 10 eine erste Befestigungsvorrichtung 36 für zumindest eine Roll- oder Gleitvorrichtung. Diese ist hier als von einem Rohr 37 umfasste Steckachsen-Aufnahmevorrichtung dargestellt. Das Rohr 37 ist dabei quer zu einer Längsachse des Tragelements 16 des Hecklastenträgers 10 angeordnet und am Rahmen 18 befestigt. Des Weiteren umfasst der Hecklastenträger 10 eine zweite Befestigungsvorrichtung 38 für eine Schub- oder Zugvorrichtung, welche am Rahmen 18 befestigt ist.

Alternativ können erste und zweite Befestigungsvorrichtung 36, 38 anders positioniert sein, z. B. an einer der Querstreben 20a - d, einer nicht dargestellten Längsstrebe, einem anderen Rahmenteil und/oder dergleichen. Beispielsweise kann eine Ausnehmung des Rahmens 18 als Steckachsen-Aufnahmevorrichtung vorgesehen und ausgeführt sein. Die hier dargestellte Fixiervorrichtung 14 kann anders ausgeführt sein und/oder am Hecklastenträger anders positioniert sein.

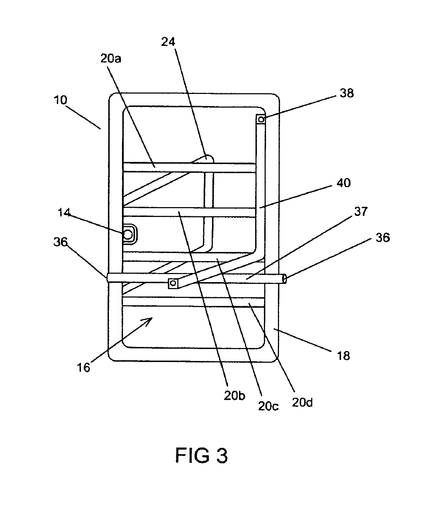

FIG 3 zeigt eine schematische Darstellung einer weiteren Ausführungsform eines erfindungsgemäßen Hecklastenträgers 10 von unten. Dieser entspricht im Wesentlichen dem in FIG 2 dargestellten. Hier ist jedoch die zweite Befestigungsvorrichtung 38 dauerhaft mit einer Schub- oder Zugvorrichtung 40 verbunden, welche hier in Ruheposition dargestellt ist. Die Schub- oder Zugvorrichtung 40, hier als eine Schub- oder Zugstange gezeigt, ist schwenkbar ausgeführt. Sie kann zudem mit einer nicht dargestellten Arretiervorrichtung in der Ruheposition arretierbar sein.

Alternativ kann die Schub- oder Zugvorrichtung 40 ausziehbar, z. B. einstückig oder mehrstückig teleskopierbar, ausgeführt sein, um diese aus der Ruheposition in eine Wirkposition zu verbringen. Dabei kann die Schub- oder Zugvorrichtung 40 aus einer Haltevorrichtung (nicht dargestellt) ausziehbar sein, welche an einer Strukturkomponente, insbesondere am Rahmen 18, befestigt oder zumindest teilweise in diese(n) integriert ist. Wenn die Haltevorrichtung am Rahmen 18 befestigt ist, z. B. an einer Unterseite des Rahmens 18, kann die Haltevorrichtung, die Schub- oder Zugvorrichtung 40 oder können beide einfach und komfortabel gewartet, repariert und/oder ausgetauscht werden. Ist die Haltevorrichtung in den Rahmen 18 integriert, so wird ein sowieso vorhandener Hohlraum im Rahmen 18 vorteilhaft genutzt. Des Weiteren ist die Schub- oder Zugvorrichtung 40 im Rahmen 18 vor Verschmutzung und/oder Beschädigung geschützt.

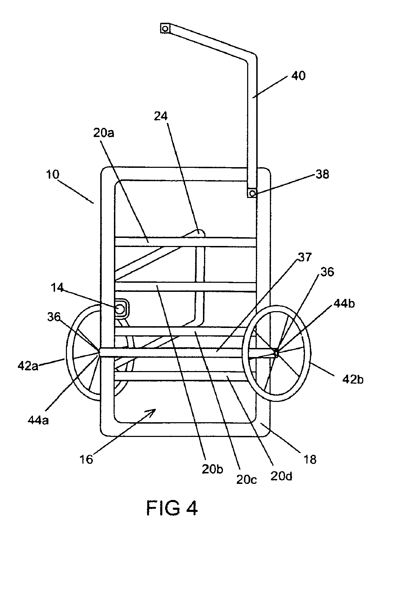

FIG 4 zeigt eine weitere schematische Darstellung einer Ausführungsform wie in FIG 3 dargestellt, ebenfalls von unten, wobei hier die Schub- oder Zugvorrichtung 40 in Wirkposition dargestellt ist.

Zwei Räder 42a, 42b sind über jeweils eine Steckachse 44a, 44b mit der ersten Befestigungsvorrichtung 36 des Hecklastenträgers 10 verbunden. Die Räder 42a, 42b sind hier parallel zueinander und auf verschiedenen Seiten einer Ebene angeordnet, welche orthogonal zu einer zum Tragelement 16 parallelen Ebene ist.

Alternativ können mehr oder weniger Räder vorhanden sein. Wenn nur ein Rad vorhanden ist, ist dieses bevorzugt auf einer Mittelsachse des Tragelements 16 angeordnet und es sind bevorzugt zwei Schub- oder Zugvorrichtungen 40 am Hecklastenträger 10 vorhanden, welche auf einer Seite des Hecklastenträgers 10, beabstandet zueinander und auf verschiedenen Seiten einer zum Rad parallelen Ebene angeordnet sind. Statt der in FIG 4 dargestellten Räder kann eine oder mehrere andere Roll- oder Gleitvorrichtung(en) vorhanden sein, also z. B. zumindest eine Kufe.

Somit lässt sich die Erfindung wie folgt zusammenfassen: Angegeben wird ein Hecklastenträger 10 für ein Kraftfahrzeug 12, welcher mit dem Kraftfahrzeug 12 lösbar verbindbar ist, wobei der Hecklastenträger 10 ein konvertierbarer Hecklastenträger ist und eine erste Befestigungsvorrichtung 36 für zumindest eine Roll- oder Gleitvorrichtung (Bodenkontaktmittel) und zumindest eine zweite Befestigungsvorrichtung 38 für eine Schub- oder Zugvorrichtung 40 umfasst sowie ein Verfahren zur reversiblen Konvertierung eines solchen Hecklastenträgers und ein Verfahren zur Kopplung eines solchen Hecklastenträgers 10 mit einem Fahrzeug.

### Bezugszeichenliste

- 10: Hecklastenträger
- 12: Kraftfahrzeug
- 14: Fixiervorrichtung
- 16: Tragelement
- 18: Rahmen
- 20a: Querstrebe
- 20b: Querstrebe
- 20c: Querstrebe
- 20d: Querstrebe
- 22a: Radhalter
- 22b: Radhalter
- 22c: Radhalter
- 22d: Radhalter
- 24: Seitenelement
- 26a: Verbindungsmittel
- 26b: Verbindungsmittel
- 28: Heck
- 30: Lichtleiste
- 32a: Leuchtelement
- 32b: Leuchtelement
- 34: Kennzeichen
- 36: erste Befestigungsvorrichtung
- 38: zweite Befestigungsvorrichtung
- 40: Schub- oder Zugverbindung
- 42a: Rad
- 42b: Rad
- 44a: Steckachse
- 44b: Steckachse

## Patentansprüche

1. Hecklastenträger (10) für ein Kraftfahrzeug (12), welcher mit dem Kraftfahrzeug (12) lösbar verbindbar ist,
wobei der Hecklastenträger (10) ein konvertierbarer Hecklastenträger ist; und eine erste Befestigungsvorrichtung (36) für zumindest eine Roll- oder Gleitvorrichtung, insbesondere einem Rad (42) als Rollvorrichtung, in Wirkposition umfasst und zumindest eine zweite Befestigungsvorrichtung (38) für eine Schub- oder Zugvorrichtung (40) umfasst,
**gekennzeichnet durch**
eine mit dem Hecklastenträger (1) lösbar verbindbare Lichtleiste (30), die zur Zugänglichmachung der ersten Befestigungsvorrichtung (36) entfernbar ist.

2. Hecklastenträger nach Anspruch 1, wobei die Schub- oder Zugvorrichtung (40) in einer Form als schwenkbare Schub- oder Zugvorrichtung (40) mit dem Hecklastenträger (10) mittels der zweiten Befestigungsvorrichtung (38) dauerhaft verbindbar oder verbunden ist.

3. Hecklastenträger nach Anspruch 2, wobei die Schub- oder Zugvorrichtung (40) in genau einer Ebene beweglich mit dem Hecklastenträger (10) verbunden ist.

4. Hecklastenträger nach einem der Ansprüche 2 oder 3 mit einer Haltevorrichtung mittels welcher die Schub- oder Zugvorrichtung (40) in einer Ruheposition lösbar arretierbar, insbesondere an einer Unterseite des Hecklastenträgers (10), ist.

5. Hecklastenträger nach einem der vorangehenden Ansprüche mit einer Kopplungsvorrichtung zur Kopplung mit einem Fahrzeug, insbesondere Zweirad, an einem freien Ende der Schub- oder Zugvorrichtung (40).

6. Hecklastenträger nach einem der vorangehenden Ansprüche mit einer insbesondere einem Seitenelement (24) des Hecklastenträgers (10) zugeordneten Arretiervorrichtung zur lösbaren Arretierung der Roll- oder Gleitvorrichtung in Ruheposition.

7. Hecklastenträger (10) nach Anspruch 6, wobei der Hecklastenträger (10) die erste Befestigungsvorrichtung (36) zum Anbringen der Roll- oder Gleitvorrichtung in einer Wirkposition umfasst und wobei der Hecklastenträger (10) entfernt von der ersten Befestigungsvorrichtung (36) die Arretiervorrichtung zur lösbaren Arretierung der Roll- oder Gleitvorrichtung in einer Ruheposition umfasst.

8. Verfahren zur Kopplung eines konvertierbaren Hecklastenträgers (10) gemäß einem der Ansprüche 1 bis 7, mit einem Fahrzeug, insbesondere einem Fahrrad, wobei die Roll- oder Gleitvorrichtung und eine Schub- oder Zugvorrichtung (40) in eine Wirkposition gebracht sind und wobei eine an einem freien Ende der Schub- oder Zugvorrichtung befindliche Kopplungsvorrichtung des Hecklastenträgers (10) mit dem Fahrzeug, insbesondere mit einem korrespondierenden Fahrzeugteil, gekoppelt wird, insbesondere mit einem Rahmenteil oder einer Radnabenachse.

9. Verfahren nach Anspruch 8, wobei zum Anbringen der Roll- oder Gleitvorrichtung in Wirkposition eine mit dem Hecklastenträger lösbar verbindbare Lichtleiste (30) entfernt wird.

10. Hecklastenträger nach einem der Ansprüche 1 bis 7 für einen Personenkraftwagen als Kraftfahrzeug (12).

## Claims

1. A rear load carrier (10) for a motor vehicle (12), which can be releasably connected to the motor vehicle (12),
wherein the rear load carrier (10) is a convertible rear load carrier; and includes a first fixing device (36) for at least one rolling or sliding device, in particular a rolling device in the form of a wheel (42), in the working position, and includes at least one second fixing device (38) for a pushing or pulling device (40),
**characterized by**
a light strip (30) which can be releasably connected to the rear load carrier (10) and which can be removed for accessing the first fixing device (36).

2. The rear load carrier as claimed in claim 1, wherein the pushing or pulling device (40) in the form of a swiveling pushing or pulling device (40) can be or is permanently connected to the rear load carrier (10) by means of the second fixing device (38).

3. The rear load carrier as claimed in claim 2, wherein the pushing or pulling device (40) is movably connected to the rear load carrier (10) in just one plane.

4. The rear load carrier as claimed in one of claims 2 or 3 having a retaining device by means of which the pushing or pulling device (40) can be releasably locked in a rest position, in particular on an underside of the rear load carrier (10).

5. The rear load carrier as claimed in one of the preceding claims having a coupling device for coupling to a vehicle, in particular a bicycle, at a free end of the pushing or pulling device (40).

6. The rear load carrier as claimed in one of the preceding claims having a locking device, which is associated in particular with a side element (24) of the rear load carrier (10), for releasably locking the rolling or sliding device in the rest position.

7. The rear load carrier (10) as claimed in claim 6, wherein the rear load carrier (10) includes the first fixing device (36) for attaching the rolling or sliding device in a working position and wherein, at a remote point from the first fixing device (36), the rear load carrier (10) includes the locking device for releasably locking the rolling or sliding device in a rest position.

8. A method for coupling a convertible rear load carrier (10) as claimed in one of claims 1 to 7 to a vehicle, in particular a motorcycle, wherein the rolling or sliding device and a pushing or pulling device (40) are brought into a working position and wherein a coupling device of the rear load carrier (10) which is located at a free end of the pushing or pulling device is coupled to the vehicle, in particular to a corresponding vehicle part, in particular to a frame part or a wheel hub axle.

9. The method as claimed in claim 8, wherein a light strip (30) which can be releasably connected to the rear load carrier is removed in order to attach the rolling or sliding device in the working position.

10. The rear load carrier as claimed in one of claims 1 to 7 for a motor vehicle (12) in the form of a passenger car.

## Revendications

1. Porte-charge arrière (10) pour un véhicule automobile (12), pouvant être relié de manière amovible au véhicule automobile (12) ;
le porte-charge arrière (10) étant un porte-charge arrière convertible ; et comprenant en position de fonctionnement un premier dispositif de fixation (36) pour au moins un dispositif de roulement ou de glissement, en particulier une roue (42) servant de dispositif de roulement, et comprenant au moins un deuxième dispositif de fixation (38) pour un dispositif de poussée ou de traction (40) ;
**caractérisé par** :
un bandeau lumineux (30) qui est apte à être relié de manière amovible au porte-charge arrière (10) et qui est apte à être enlevé pour donner accès au premier dispositif de fixation (36).

2. Porte-charge arrière selon la revendication 1, dans lequel le dispositif de poussée ou de traction (40), sous la forme d'un dispositif de poussée ou de traction (40) pivotant, est relié ou apte à être relié de manière durable au porte-charge arrière (10) à l'aide du deuxième dispositif de fixation (38).

3. Porte-charge arrière selon la revendication 2, dans lequel le dispositif de poussée ou de traction (40) est relié au porte-charge arrière (10) en pouvant se déplacer dans précisément un plan.

4. Porte-charge arrière selon l'une des revendications 2 ou 3, comportant un dispositif de maintien grâce auquel le dispositif de poussée ou de traction (40) est immobilisable dans une position de repos, en particulier sur un côté inférieur du porte-charge arrière (10).

5. Porte-charge arrière selon l'une des revendications précédentes, comportant un dispositif d'accouplement destiné à l'accouplement avec un véhicule, en particulier un deux-roues, à une extrémité libre du dispositif de poussée ou de traction (40).

6. Porte-charge arrière selon l'une des revendications précédentes, comportant un dispositif d'arrêt, associé en particulier à un élément latéral (24) du porte-charge arrière (10), et destiné à immobiliser de manière amovible le dispositif de roulement ou de glissement dans une position de repos.

7. Porte-charge arrière (10) selon la revendication 6, dans lequel le porte-charge arrière (10) comprend le premier dispositif de fixation (36) pour placer le dispositif de roulement ou de glissement dans une position de fonctionnement, et dans lequel le porte-charge arrière (10) comprend, à distance du premier dispositif de fixation (36), le dispositif d'arrêt destiné à immobiliser de manière amovible le dispositif de roulement ou de glissement dans une position de repos.

8. Procédé d'accouplement d'un porte-charge arrière (10) convertible, selon l'une des revendications 1 à 7, avec un véhicule, en particulier une bicyclette, dans lequel le dispositif de roulement ou de glissement et un dispositif de poussée ou de traction (40) sont amenés dans une position de fonctionnement et dans lequel un dispositif d'accouplement du porte-charge arrière (10) se trouvant à une extrémité libre du dispositif de poussée ou de traction est accouplé avec le véhicule, en particulier avec une partie correspondante du véhicule, en particulier avec une partie du châssis ou avec un essieu de moyeu de roue.

9. Procédé selon la revendication 8, dans lequel un bandeau lumineux (30) pouvant être relié de manière amovible au porte-charge arrière est enlevé pour placer le dispositif de roulement ou de glissement en position de fonctionnement.

10. Porte-charge arrière selon l'une des revendications 1 à 7 pour une voiture automobile légère servant de véhicule automobile (12).
